Europäisches Patentamt

European Patent Office

Office européen des brevets

(19)

(11) EP 0 559 801 B1

# (12) EUROPEAN PATENT SPECIFICATION

(45) Date of publication and mention
of the grant of the patent:
**09.07.1997 Bulletin 1997/28**

(21) Application number: **92902019.6**

(22) Date of filing: **27.11.1991**

(51) Int Cl.⁶: **G03B 35/04**

(86) International application number:
**PCT/US91/08868**

(87) International publication number:
**WO 92/09922 (11.06.1992 Gazette 1992/13)**

(54) **SINGLE CAMERA AUTOSTEREOSCOPIC IMAGING SYSTEM**

AUTOSTEREOSKOPISCHES ABBILDUNGSSYSTEM MIT EINER EINZIGEN KAMERA

SYSTEME DE FORMATION D'IMAGE AUTO-STEREOSCOPIQUE UTILISANT UNE SUULE CAMERA

(84) Designated Contracting States:
**AT BE CH DE DK ES FR GB GR IT LI LU NL SE**

(30) Priority: **29.11.1990 US 619512**

(43) Date of publication of application:
**15.09.1993 Bulletin 1993/37**

(73) Proprietor: **VISION III IMAGING, INC.**
**Herndon, Virginia 22070 (US)**

(72) Inventors:
• **PRITCHARD, Eric, K.**
**Berkeley Springs, WV 25411 (US)**
• **MAYHEW, Christopher, A.**
**Oakton, VA 22124 (US)**

(74) Representative: **Sajda, Wolf E., Dipl.-Phys. et al**
**MEISSNER, BOLTE & PARTNER**
**Widenmayerstrasse 48**
**80538 München (DE)**

(56) References cited:
GB-A- 2 135 470          US-A- 1 950 473
US-A- 2 303 742          US-A- 2 356 441
US-A- 4 815 819

• SMPTE Journal, June 1991, Vision III Single-Camera Autostereoscopic Methods, Christopher A. Mayhew, page 416-422
• WO91/06185

## Description

This is a continuation-in-part of U.S. patent application serial number 425,232 filed October 23, 1989, now U.S. Patent 5,014,126 and PCT application PCT/US90/06036.

This invention relates to stereoscopic imaging systems for creating a three-dimensional illusion using motion pictures or video recorders. It is more closely related to autostereoscopic systems, which produce true three-dimensional images which do not require glasses or parallax barriers to create a three-dimensional illusion.

The PCT application PCT/US90/06036 with an earlier priority and with the publication no. WO 91/06185 discloses an image recorder for autostereoscopic display. The recording apparatus comprises a single recording means, preferably a camera, for recording images and having an optical path through a convergence joint. A scanning mechanism is provided for defining an arcuate scanning path transverse to the optical path. Driving means are coupled to reciprocally drive the recording means along the scanning path while the optical path remains centered at the convergence point.

The United States Patent US-A-1 950 473 discloses an apparatus for making films which produce stereoscopic pictures. The apparatus comprises a single cinematographic camera supported by a supporting plate adapted to be placed on a stand. Vertical curved guides are mounted to the supporting plate where the center of curvature of the guides coincides with a convergence point on the object to be photographed. A bracket carrying the camera is adapted to be shifted up and down along the vertical guides, the bracket being driven up and down during the taking of the photographs. The preamble of claim 1 is based on this reference.

Humans perceive movement in motion pictures and television because of the brain mechanisms underlying such established psychological facts as persistence of vision and the phiphenomenon. Depth is perceived by the interpretation of disparity information from the eyes through a process called stereopsis. What stereopsis is and how it is performed are still a matter of some debate.

Humans have binocular (stereoscopic) vision-two eyes that look in the same direction and whose visual fields overlap. The eyes are horizontally aligned and separated by an interocular distance averaging about 65mm. Each eye views the scene from a slightly different angle. The scene viewed is focused by the eye's lens onto the retina as a two-dimensional image. The two-dimensional images from each eye are transmitted along the optic nerves to the brain's visual cortex. The monocular and parallax depth information from the eyes is compared and interpreted through stereopsis, to form a true three-dimensional view.

A distinction must be made between monocular depth cues and parallax information in the visual information received. Both eyes provide essentially the same monocular depth cues, but each provides different parallax depth information, a difference that is essential to produce a true three-dimensional view.

It is possible to perceive depth to a certain extent in a two-dimensional image. Monocular depth is perceived when viewing a still photograph, a painting, or standard television and movies, or when looking at a scene with one eye closed. It is perceived without the benefit of binocular parallax depth information. Such depth relations are interpreted by the brain from monocular depth cues such as relative size, overlapping, perspective, and shading

Even though human eyes are horizontally aligned, the brain will process parallax information from any direction. It has been reported that vertical parallax information when displayed at a rate of 4 to 30 Hz, produces a sense of depth that is superior to that produced by horizontal parallax presented in the same manner.

It has also been reported that the fusion range of stereoscopic vision is within a 40 minutes (.66°) angle for horizontal disparity and up to a 7 minutes (.1166°) angle for vertical disparity.

Parallax information does not have to be presented to the brain simultaneously. The left and right eye depth information can be presented alternately to the left and right eyes, resulting in depth perception as long as the time interval does not exceed 100 milliseconds. The brain can extract parallax information from a three-dimensional scene even when the eyes are alternately covered and uncovered for periods of up to 100 milliseconds each. The brain can also accept and process parallax information presented to both eyes if sequenced properly. The ideal view cycle sequencing rate is between 3-6 Hz.

True three-dimensional image displays can be divided into two main categories, stereoscopic or binocular and autostereoscopic. Stereoscopic techniques (including stereoscopes, polarization, anaglyphic, Pulfrich, and shuttering technologies) require the viewer to wear a viewing apparatus. Autostereoscopic techniques (such as holography, lenticular screens, parallax barriers, alternating pairs, and parallax scans) produce images with a true three-dimensional illusion without the use of glasses.

Prior art three-dimensional television or motion picture display system, that did not require viewing glasses, alternately displayed views of a scene recorded by two cameras at their respective points of view. U.S. patent 4,006,291 to Imsand, U.S. patents 4,303,316 and 4,420,230 to McElveen, and U.S. patent 4,429,328 to Jones, et al describe methods using horizontally, vertically and a combination of horizontally and vertically displaced views. The images produced using the method of Jones, et al did appear three-dimensional, but were extremely unstable and possessed a distracting rocking motion. Jones, in U.S. patent 4,528,587, attempted to control the rocking motion by using a video mixing device, which intermittently superimposed the second camera's image onto that of the first, rather than alternating images as before. This mixing technique did little to control rocking and resulted in intermittent image softening.

The applicants have experimented with the known alternating-camera methods and concluded that stable three-dimensional images could not be achieved simply by aligning two cameras vertically, horizontally or diagonally and switching between or mixing them at a 4 to 5 Hz view cycle rate. Commercial production standards today are much too high for the image instability and/or softening inherent in these methods.

Unlike stereoscopic techniques, which provide each eye with a different image, alternating techniques provide the same image to both eyes. With a stereoscopic system the brain will compensate for some mismatch of camera lenses, color and luminance differences, and differences in parallax angles. In alternating systems the slightest mismatch is readily perceived.

Image instability (rocking) is caused by a variety of factors. The main cause is the presentation of alternating points of view that differ in parallax and are not in tune to be perceived as depth rather than motion. Since all prior art alternating techniques use two cameras, factors such as improper alignment of cameras, lenses mismatched in focal length and/or focus, chrominance and luminance mismatches, poor quality optics, polarization differences, and misplaced convergent point all contribute to image instability. Another problem is the methods used to obtain the parallax information. Provisions must be made for constant parallax and convergent corrections during shooting in order to keep the depth information in tune with the human brain.

Image instability can be rendered less noticeable by the use of masking techniques. Camera motion is very effective in hiding rocking, apparently because the brain places less importance on the rocking motion than on the camera motion. This result could represent some sort of natural stabilizing phenomenon or mechanism of the brain that helps us see clearly when we walk or run, when the images would otherwise bounce.

Proper camera convergence and parallax angle adjustment are also very important. Our tests have shown that if the convergent point is set on the closest object to the camera or closer and the parallax angles are in tune with the scene being shot, the brain tends to disregard background motion, if it is combined with camera motion. If the convergent point is set behind the closest object, that object will rock and the rocking cannot be masked by camera motion or parallax tuning. If the camera moves, the closest object moves, or something enters the frame closer than the convergent point, the convergent point must be pulled back and the parallax angle adjusted (tuned) accordingly. The reverse is also true, if the closet object moves farther away from the camera, the parallax angle should also be adjusted.

The methods and camera system described in U.S. patent numbers 4,815,819 and 4,966,436 to Mayhew and Pritchard require careful camera alignment to eliminate unwanted movement in all depth planes. Precision matching of chrominance and luminance between cameras, and a good deal of operator skill to manipulate disparity, convergence, and time-displacement rates required to maintain a stable image.

Even though this two camera system can deliver a very stable, broadcast-quality video image, it is not ideal for day to day television production. The cameras require constant alignment adjustment. Because of the folded optical path, lenses with a view wider than that of a 32mm lens can not be used, and zoom lenses are not practical. The fact that the system uses a special mount to hold two cameras and a folded optical path makes it large and heavy.

For all of the reasons above the autostereoscopic methods using a single camera which are the subject of US-A-5,014,126, were developed. The methods described in said U.S. Patent do not suffer from any of the matching, alignment, and lens limitations of the prior art. Other single camera systems have been suggested and some even developed for three-dimensional imaging, but all use two lenses or some type of beamsplitter to provide two differing parallax views.

Most prior art shuttering stereoscopic and autostereoscopic motion picture and television techniques use square wave switching methods to alternate between the two points of view, or origin. The abrupt shift in parallax in square wave switching contributes to image instability.

The present application approach is to give each frame its own parallax scan. Each frame and its scan preferably will fall on one or the other side of the nominal optical axis of the camera, which is the point of zero amplitude of the sine wave. The camera imaging plane's optical axis sweeps across the nominal and through positions having parallax.

A parallax scan is different from the prior art point of view or origin. A typical point of view has the same angle of parallax at the start and end of a particular frame's exposure. The angle in radians is determined by the disparity of the point of origin (distance from the nominal) divided by the distance to the point of convergence (for angle in degrees multiply by 57.2958). One point is on one side of the nominal and one the other. Each point may have several frames exposed from it, or as few as one field in video.

Parallax scanning techniques employ a continuously moving imaging plane. A particular frame will start its exposure at one angle of parallax and end it at another angle of parallax, which is greater or less than the starting angle depending on where the frame lies in the scan. A parallax scan can sweep back and forth across the nominal zero point in any direction-horizontal, diagonal or vertical. The scanning motion blurs the background of the frame slightly and therefore helps mask unwanted rocking. The optical axis of the parallax scan is centered on the point of convergence. A parallax scan can achieve a very large angle of parallax in its extreme exposure frame and a high overall average angle of parallax. Because the differences are slight, a sine wave can also be approximated by a parabolic sequence.

It is an object of invention is to provide a disparity control system which is locked to the camera frames or fields.

A still further object of this invention is to provide a disparity control responsive to the scene velocity.

Another object of this invention is to provide automatic adjustment of the scanning convergent point.

According to the present invention, an image recorder and a method are provided as defined in claims 1 and 11, respectively.

The preferred scanning mechanism may include a rail transverse to the optical path and a second rail displaced from the optical path at an angle to the first rail. The recorder is mounted to move on the rails. The convergent point of the system may be adjusted by moving the recorder and the rail system relative to each other. This may be achieved by moving the rail structure along the optical path or changing the angle of the second or convergent rail. A path defining structure may define a linear path orthogonal to the optical path and include a lens which converges the optical path on the convergent point. Alternatively, the scanning mechanism may define an arc which is centered about a fixed point in the optical point and the lens for causing the optical path to intersect the second fixed point. The convergent point is one of the first or second fixed points. In either system, the convergent point may be adjusted by changing the distance between the lens and the recorder or the first fixed point.

The driving device which produces vibration-free scanning motion preferably includes a support to which a first and second mass are movably mounted. The recorder is connected to the first mass. A drive for the masses substantially continuously moves the first and second masses in opposite directions such that the recorder moves along the scanning path for a plurality of scanning cycles. The second mass has substantially the same mass as the first mass plus the mass of the recorder. The drive for the masses includes an armature and a stator mounted to the first and second masses. The first and second masses are mounted to the support by a pulley structure to produce the equal and opposite motion.

The convergent point may be adjusted automatically by a device which determines the distance between the recorder and a desired convergent point thereby adjusting the scanning path to maintain the optical path on the desired convergent point during scanning.

The extent or amplitude of the scanning path is adjusted depending upon the degree of motion in the scene or of the apparatus. Because of observed masking techniques, the amount of travel is increased for the degree of motion. The amount of motion is determined by correlation between successive recorded images.

The driver structure is synchronized to the recorder operation. The synchronization preferably controls the drivers for bi-directional operation of the recorders such that double exposure can be produced while maintaining the three-dimensional effect.

In addition to the parallax effect produced by recording a plurality of scanning images during a cycle, additional external stimuli is preferably provided. The position of the recorder along the scanning path is determined and the ultimate image is adjusted. The image may be adjusted within the recording frame or during the display of the recording frame.

Other objects and advantages of the present invention will become apparent from the following detailed description of embodiments when considered in conjunction with the accompanying drawings.

Figure 1 is the front view of an autostereoscopic camera according to one embodiment of the present invention;

Figure 2 is the side view of an autostereoscopic camera of Figure 1;

Figure 3 is the side view of an autostereoscopic camera with its components removed to expose the convergent rail system;

Figure 4 is a schematic of the convergent motion;

Figure 5 is a block diagram of a convergent point control system according to another embodiment of the present invention;

Figure 6 is a side view of a counterbalanced linear motor for disparity drive which eliminates vibrations;

Figure 7 is a block diagram of a control system for the disparity motor of Figure 6;

Figure 8 is a block diagram of a scene velocity measurement system for the automatic controller of Figure 7 according to another embodiment of the present invention;

Figure 9 is a schematic view of an autostereoscopic camera system using a cylindrical lens to provide convergence;

Figure 9A is a schematic view of an autostereoscopic camera using a cylindrical lens with adjustable convergence;

Figure 10 is a schematic view of an autostereoscopic camera using a cylindrical lens for convergence and an oscillating cube for disparity;

Figure 11 is a top view of the system shown in Figure 10;

Figure 12 is a block diagram of a video system with display disparity according to another embodiment of the present invention;

Figure 13 is a schematic view of a two convergent rail system;

Figure 14 is a schematic view of a variation of the embodiment of Figures 1-4; and

Figure 15 is a schematic view of an optical system using a pair of optical guides.

The preferred embodiment for professional film and television use provides the greatest versatility in disparity (the extent of the scan) and convergence (focus or hub of the scan); both are continuously variable.

This embodiment shows a film camera, however the technique is equally applicable to television and other motion imaging techniques. Further, this embodiment shows vertical scanning however the technique can be applied to horizontal scanning or a combination of vertical and horizontal scanning by simply rotating the scanning mechanism. Still further the linear techniques maybe converted to rotary to produce a circular or elliptical scanning.

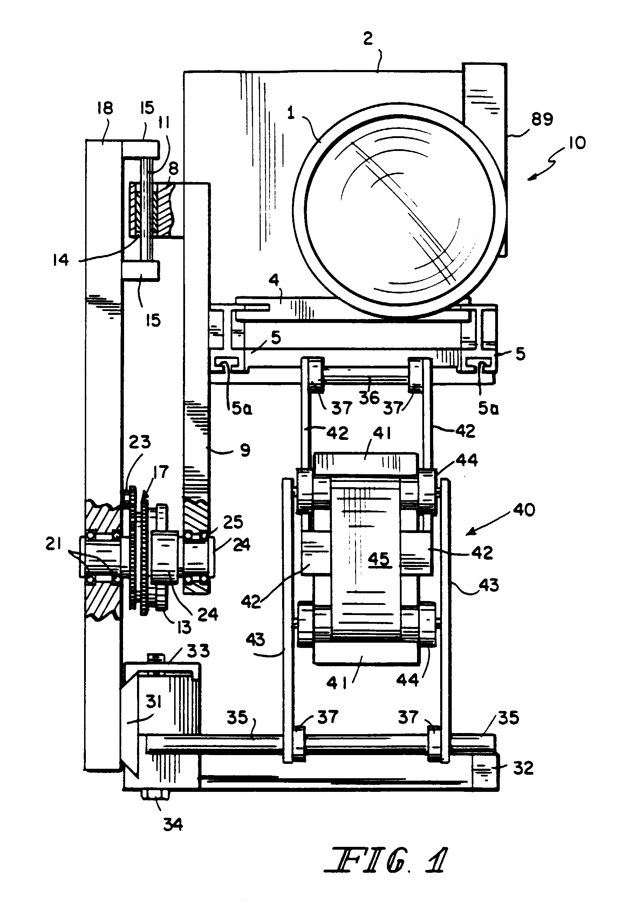

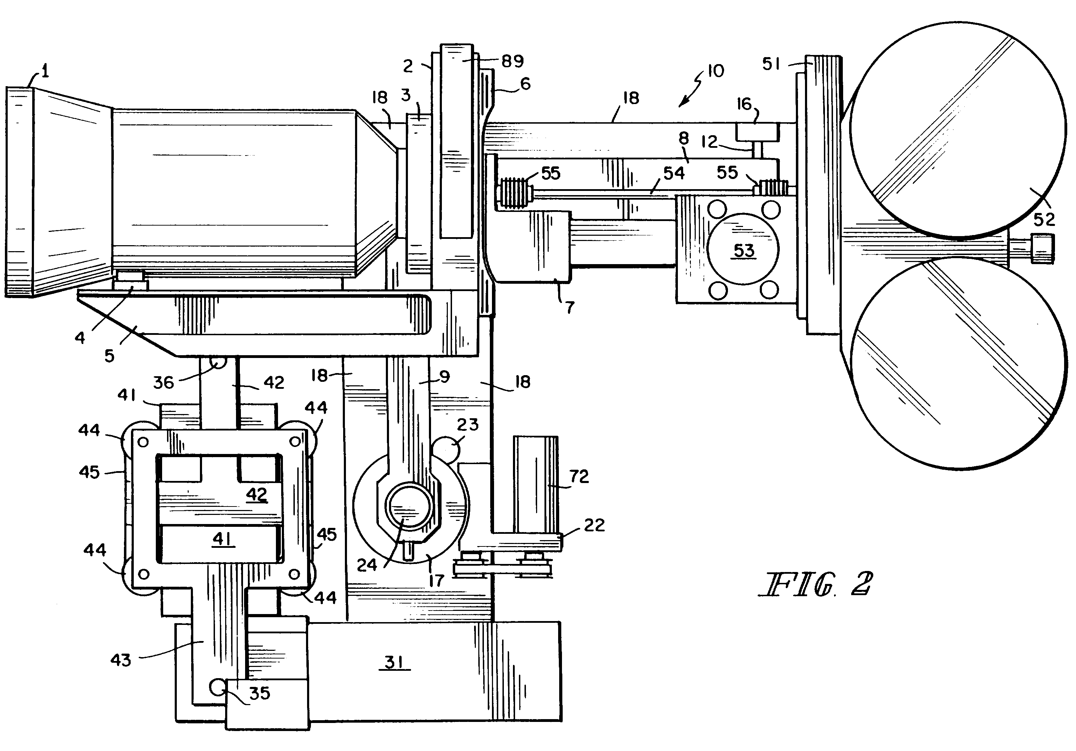

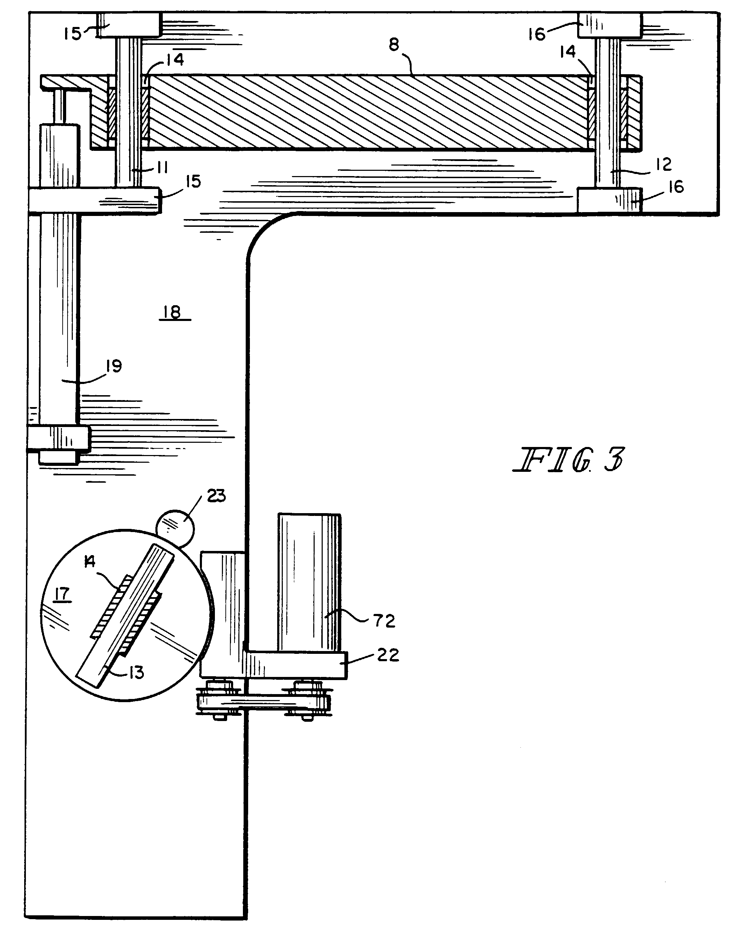

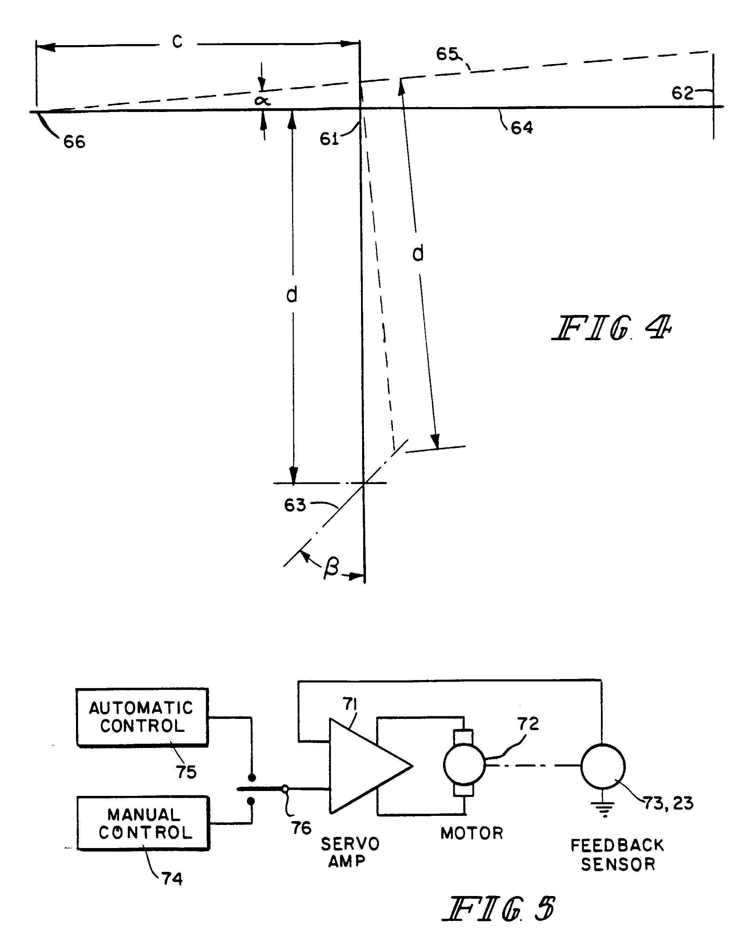

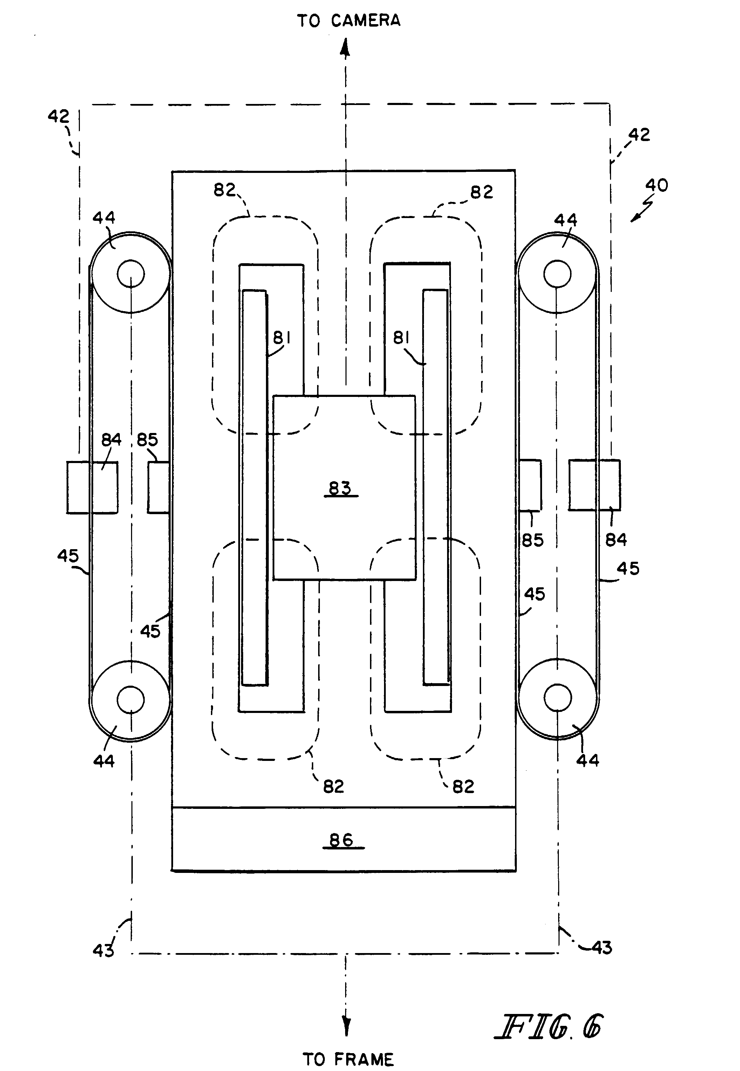

The preferred embodiment is depicted in Figures 1, 2 and 3 in front and side views respectively. The lens 1 is connected to the camera front 2 by the lens mount 3 and by the lens support 4 and 5. The camera front 2 supports the aperture plate 6 and movement 7. The remaining solid connections to the camera front 2 are the yaw arm 8 and the convergent arm 9. Elements 1-9 constitute a camera front assembly 10.

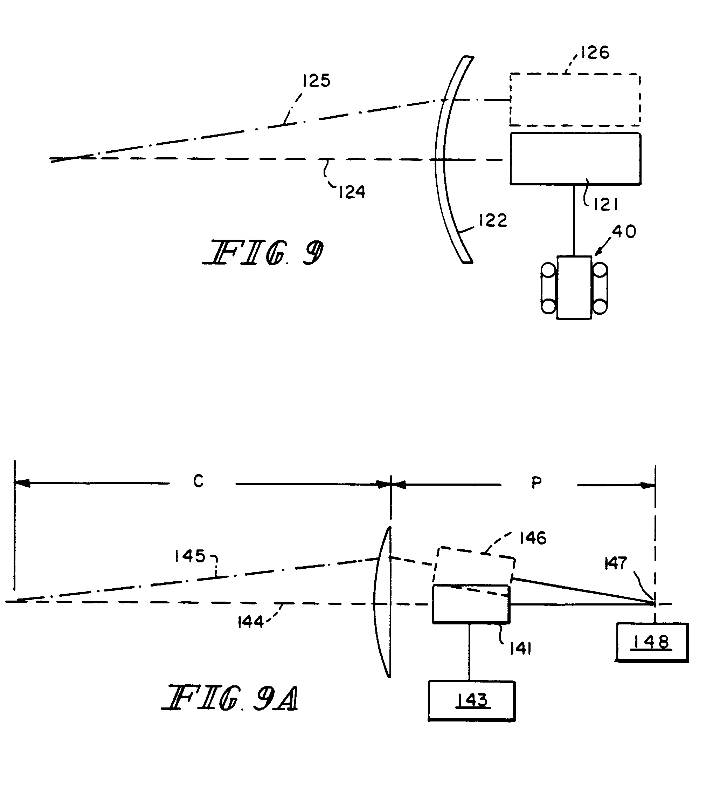

The camera front assembly 10 moves on front rail 11, rear rail 12, and convergent rail 13 with aid of linear bearings such as 14 shown in detail in Figure 3. The linear bearing 14 for rails 11 and 12 are preferably Thompson Industries super ball bushings which allow for angular misalignment of .009 inch per inch or 9 milliradians of rotation. This is more than acceptable since the maximum demanded for autostereoscopic imaging is 2 milliradians.

The rails 11, 12, and 13 are supported by blocks 15 and 16 and by convergent gear 17 respectively. Components 15-17 are supported by the camera frame 18. The camera frame 18 also supports the rear of the camera and is fastened to a pan and tilt support system (not shown) which supports the camera system from the side.

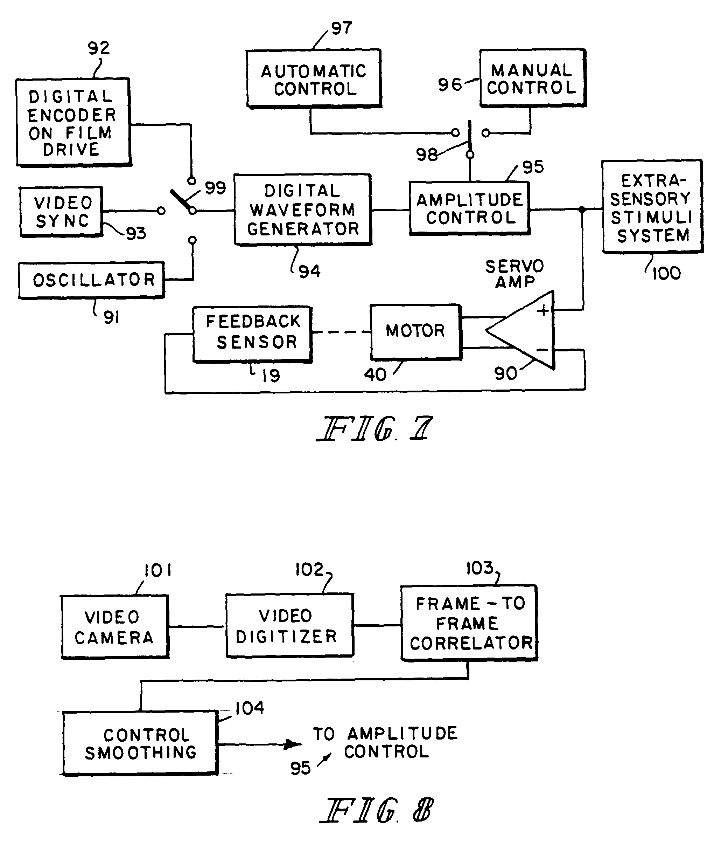

The convergent gear 17 is rotatably mounted to camera frame 18 by bearings 21 and driven by motor and gear assembly 22. The position of the convergent gear 17 or angle of convergent rail 13 is transmitted to a servo positioning system by feedback sensor 73 of Figure 5 by gear 23. The position of the camera front assembly 10 is sensed by sensor 19, which was omitted from Figures 1 and 2 for clarity, and used in the control circuit of Figure 7.

A linear bearing assembly 24 which includes bearing 14 connects the convergent rail 13 to and rotates in the convergent arm 9 on bearings 25. The convergent rail 13 is moved out of line with rail 11 to make the camera front move in an approximate arc about a convergent point in front of the camera.

The scanning motor assembly and camera front assembly 10 are supported by cross arm 31 which is connected to the bottom of camera frame 18. Support arm 32 is clamped to cross arm 31 with a clamp 33 and bolt 34. Support rail 35 is bolted to support arm 32 while rail 36 is bolted to lens support 5 via T-nuts, not shown, in the T-nut slots 5a in lens support 5. Collars 37 locate the scanning or disparity motor 40 left and right on rails 35 and 36. The scanning motor 40 may be moved forward and rearward via the support arm assembly 32-35 and the rail 36 in conjunction with the aforementioned T-nuts in lens supports 5.

The scanning motor 40 must be positioned so that its center of gravity is in line with the center of gravity of the camera front assembly 10 wherein said line is the direction of the scan. This is one of the necessary conditions for a perfectly counterbalanced system, i.e. a system which does not vibrate the camera or the camera mount.

Briefly, the scanning motor 40 consists of stator 41, armature 42, frame 43, rollers 44, and belts 45. The stator 41 is a permanent magnet structure which provides reaction mass and the magnetic field to work armature 42. The belts 45 are stretched over pairs of rollers 44. The belts 45 are also fastened to the armature 42 and stator 41 so that the armature 42 and stator 41 move in opposite directions with respect to frame 43. The specific attachment is shown in Figure 6.

The total weight of the camera front assembly 10, the stator 41 and armature 42 are supported by the rollers 44, motor frame 43, rail 35, etc.

A counterbalanced vibration free system requires that the stator 41 balances armature 42 and camera front assembly 10 and rail 36. Since the pulley belt system moves the stator 41 and armature 42 equally, the stator 41 must weigh the same as the components 1-9, 36, 37, and 42. If the stator 41 and armature 42 move unequally, then the weights must be different.

The camera rear 51 is supported by camera frame 18. The camera rear 51 accepts the film magazine 52 and mounts a film drive motor, not shown. This film drive motor drives the sprocket 53 and drive shaft 54 via couplings 55. These couplings are preferably the bellows variety to transmit power to the movement 7 and shutter, not shown, while allowing for the varying angle and distance between the camera front 2 and camera rear 51.

The sides, top, and bottom of the camera can not be solid, but are a bellows and are used in a manner similar to the bellows in a view camera.

It is important to isolate the motion from the front of the camera to the rear because the rear components are heavy and the film moves in the magazine 52, thereby changing the weight distribution.

Figure 4 is a schematic diagram of the convergent motion. Lines 61, 62, and 63 represent the axis of rails 11, 12, and 13 respectively. Line 64 is the nominal optical path while Line 65 is an off nominal optical path separated by angle $\alpha$ at the at the convergent point 66. The convergent rail 63 is at an angle $\beta$ with respect to front rail 61. The distance c is the distance to the convergent point while d is the distance from the nominal optical axis 64 to the center of rotation of the convergent rail 13 and gear 17.

The relationship between the distance c and the angle $\beta$ is approximately:

$$c = d \cot \beta$$

This relationship is accurate so long as $\alpha$ is small. Fortunately, the limit for good autostereoscopic imaging is 2 milliradians, a small angle.

The kinematic arts contain other examples of arc approximating mechanisms. This one is preferred because of its light weight and rigidity. However the motion of the camera about a convergent point 66 may be accomplished in a number of ways.

Note that a video camera system may either move the entire camera or may use a video camera split into two parts which are joined by a cable, such as a Sony BVP-7T umbilical video camera. With such a video camera, only the video head and lens need be manipulated in a scanning path as previously described.

Figure 5 is the preferred convergent point control system which consist of servo amplifier 71, motor 72, feedback sensor 73, and input command sources 74 and 75. The motor 72 is in the motor assembly 22. The sensor 73 is driven by gear 23. The amplifier 71 drives the motor 72 to make the feedback sensor 73 output match the command. The command may be input by manual control 74 or by automatic control 75 as selected by a switch 76. The automatic control 75 would include the ability to measure the distance to the desired convergent point 66..

The convergent distance is usually less than or equal to the distance to the closest object to the camera imaging plane. The convergent distance is measured by a sensor and converted by the following relationship:

$$\beta = \cot^{-1} (Fc/d)$$

where F is a distance fraction to put the convergent point between the camera and the closest object.

Figure 6 is an enlarged diagram of the preferred counterbalanced vibration free linear scanning motor 40 which also appears in Figures 1 and 2. The stator 41 is a magnetic structure which includes permanent magnets 81 which produce magnetic flux paths 82. Current in coil 83 of the armature 42 interacts with the flux to produce a force up or down the page. The force on the stator 41 is the same magnitude as the force on the coil 83.

The stator permanent magnet force accelerates the stator 41 and the coil force accelerates the coil armature 42 and the camera front assembly 10. If there were no other forces or requirements no further considerations need be made. However, the force of gravity must be considered. The simplest way of dealing with gravity and generally keeping everything together is to use rollers 44 and belts 45 to couple the stator 41 and the armature 42. Clamps 84 lock the belt 45 to the armature 42 while clamps 85 lock the belt 45 to the stator 41. This puts the gravitational forces through the pulleys 44 and into the support 43 then on to the camera frame 18.

The pulleys force the acceleration of the stator 41 to be equal but opposite to armature 42 and camera front assembly 10. These components must have the same mass so that equal but opposite magnetic forces will produce equal but opposite forces. Otherwise the pulley and belts will equalize the forces by passing the forces to the next available mass; the camera frame 18; an undesirable situation.

Extra mass 86 may be required on the stator 41 if the camera front assembly 10 and armature 42, weighs more than the stator 41. Otherwise, weight has to be added to the camera front assembly 10.

Figure 7 is the preferred disparity control assembly system which drives the scanning motor 40 of Figure 6 and moves the camera front assembly 10 along the approximate arc established by rails 11-13. Feedback sensor 19 produces a feedback signal indicative of this motion and servo amplifier 90 drives the motor 40 so that the feedback signal nearly matches the command signal from the amplitude control 95.

There are two facets to this control signal, its frequency and its amplitude. Both are controlled. The frequency of the control system must be such that when the images acquired by the camera are displayed the disparity motion frequency will be in the range acceptable to the brain. If this were the only consideration, the frequency source could be a suitable oscillator 91. However, the disparity operation may need to maintain some phase relationship with the camera system. Film systems use an encoder 92 which produces pulses in response to shutter rotation so that the disparity drive is slaved to the film. The preferred encoder system is bidirectional so that the disparity (scan path) backs up when film is rewound. This permits for double exposures. Similarly, the sync pulses 93 from video systems synchronize the disparity operations. The appropriate synchronization source is selected by switch 99.

The selected frequency signal drives the digital waveform generator 94. This generator includes a frequency divider which can be preset to determine the number of camera frames or images recorded per disparity or scanning cycle. Preferably this counter is bidirectional to work best with film applications. This counter then drives a second counter, also preferably bidirectional for film applications.

The output of this second counter is used to produce the output waveform. Although the usual techniques of a read-only-memory driven digital-to-analog converter may be used, a twin-converter circuit producing parabolic waveforms is preferred.

The twin converter techniques uses the first converter to produce a value proportional to the counter value. This value is accepted as a reference by the second converter. The 1-x output produces the desired parabolic $x - x^2$. This is made sinusoidal like by alternating the reference to the first converter between plus and minus. The parabola produces slightly greater disparities for the same signal limits.

The waveform then passes through the amplitude control 95 on its way to the servo amplifier 90. The amplitude may be controlled by manual control 96 or via the automatic controller 97 as selected by switch 98. The automatic controller would include measurement of camera and scene velocity.

Excessive disparity amplitude is perceived as rocking in the image. However, the extent of the rocking in the image is controlled by the velocities in the image. As discussed previously, some motion in the scene will mask other motions. For example, horizontal motion of the image will mask or allow greater vertical motion or disparity. Thus the amount, amplitude or extent of the disparity or length of the scanning path can be increased for increased scene motion. These velocities are created by pan, tilt, trucking of the camera, zooming of the lens, subject movement or movement of other objects in the scene. One approach is to simply measure the camera motion and create an amplitude control therefrom. To account for scene motion as well as camera motion, correlation of the recorded images is preferred.

The preferred automatic system acquires video images from a video camera, either as the primary camera or as a secondary camera in a video tap 89 as shown in Figures 1 and 2. The video signal is digitized and stored in memory for a computer correlation with a prior frame. The location of best correlation is indicative of the velocity of the scene. If the best correlation with a prior frame requires a significant location change, then the scene is moving significantly. A small change in location is indicative of small scene velocities. The location changes are then smoothed, scaled, and used to control the amplitude.

This subsystem is shown in Figure 8. The video camera 101 creates an output which is digitized by digitizer 102. The digitized image is correlated with a prior image by correlator 103. The resulting control value is then smoothed by smoothing control 104 and used to control the amplitude 95.

The use of automatic controls for these camera functions simplifies the cameraperson's job by making the system user friendly.

The single camera autostereoscopic and similar techniques do not directly indicate where the view is. This is inferred by the background motion. The view is up if the background is down, and vice versa. However, in abstract situations where the background is not so readily recognizable or not even present, this inference is difficult or impossible. The operation of the single camera system is similar to the human vision and image processing of the brain when walking. Walking causes a cyclic change in height of the eyes, a parallax scan. However, the brain also knows the position of the eyes in the walking parallax scan.

It is the function of the extra-sensory stimuli system 100 to provide the extra stimuli to the brain to provide the parallax scan position directly using the disparity amplitude control signal from amplitude control 195 as the scan position. Alternatively, the extra-sensory stimuli system 100 could use the signal from feedback sensor 19.

The preferred embodiment uses the scan position signal to offset the position of the image on a television monitor. The offset is down when the camera is looking down, up when up, left when left, etc. The position of the eyes then conveys the position of the scan to the brain. For movie projectors, the shift can be accomplished by moving the film gate or the lens in a similar manner.

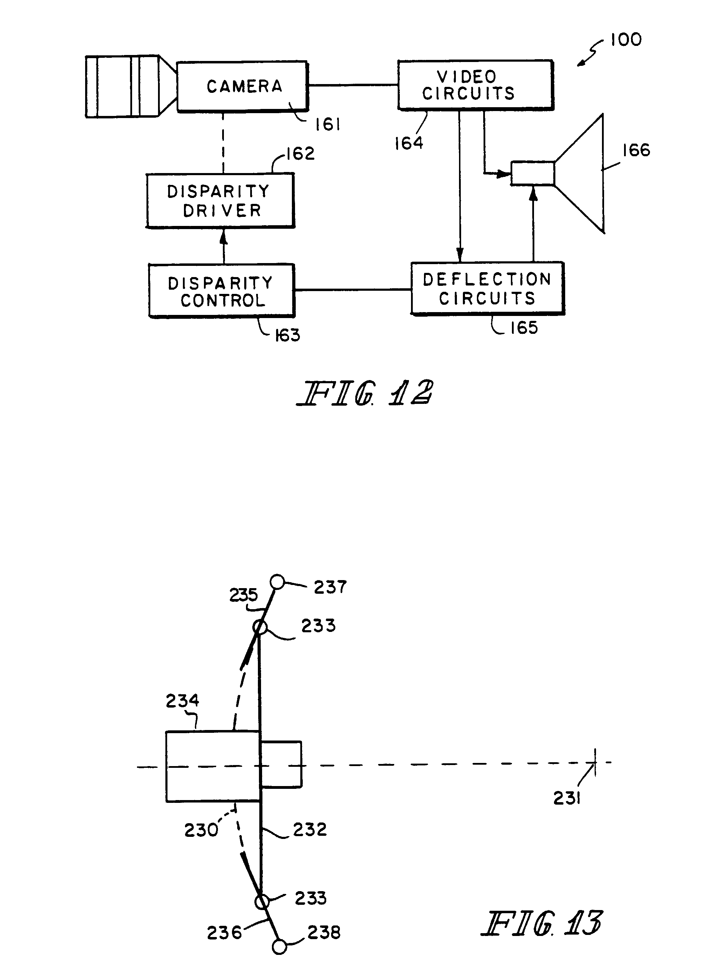

The preferred embodiment of the extra-sensory stimulus system 100 is shown in Figure 12. The video camera 161 is driven in a parallax scan by disparity driver 162. The disparity driver is controlled by 163 which is described herein above and shown in Figure 7. The camera drives video circuits 164. The video circuits send sync signals to the deflection circuits 165. The video circuits 164 also control the intensity of the image on cathode ray tube 166. The deflection circuits control the deflection of the electron beam as it travels from the cathode to the face of 166.

The signal from the disparity control 163 to the deflection circuits 165 moves the image on 166 in response to the parallax scan generated by 163. This is done by adding vertical parallax scan to the vertical deflection amplifier of 165 and horizontal parallax scan, if used, to the horizontal deflection amplifier of 165.

Other concepts for the extra-sensory stimuli system 100 include a very large disparity driver for moving the viewer, and an audible signal whose frequency is controlled by the disparity driver. However, these techniques are more expensive and require viewer education respectively.

The above described system is quite extensive, large and potentially delicate. The complexities of continuous convergent point control may be avoided if the convergent point is fixed. Although the convergent rail 13 could be set at a fixed angle, a cylindrical lens may also be employed as in Figure 9 and the convergent rail 13 eliminated. The camera 121 moves across the curvature of the lens 122 by counterbalanced motor 40.

The nominal dashed optical axis 124 travels through lens 122 without bending. However the dot-dashed displaced optical axis 125 from displaced camera 126 is bent. Since the camera moves parallel to the nominal optical axis 124, the displaced optical axis 125 crosses (converges) 124 at the focal point of the lens.

The cylindrical lens 122 may be changed to alter convergence. These lenses may be mounted in a turret for more convenience or a varying focal length cylindrical lens system may be employed.

The above discussions for disparity control apply to this system as well, although the waveform generator 94 may be reduced to a simple sine wave oscillator in a very simple system.

Figure 9A is a generalization of Figure 9. It follows further the similarity of the parallax scan to lens behavior. Instead of the camera system moving from a nominal position 121 to a parallax position 126 linearly as in Figure 9, the camera system moves from a nominal position 141 to a parallax position 146 in an arc by rotary disparity actuator 143. Unlike the camera 126 to lens 122 segment of optical path 125 which is parallel to nominal path 124, the similar segment of 145 is angled towards rotation point 147.

The lens relationship is used to determine the convergent point:

$$1/c = 1/f - 1/p$$

where f is the focal length of lens 142.

A positioner 148 moves the point 147 along the axis 144 with respect to lens 142. This system readily moves the convergence from infinity to a few times the focal length of lens 142. Closer convergence requires significant movement by positioner 148. Alternatively, the positioner 148 could move the lens 142 to vary the relationship between c and p.

The rotary disparity actuator 143 is similar in function to the scanning motor 40 and preferably reactionless. If the pivot 147 is on the other side of lens 142 then it has a negative focal length.

Positioner 148 is similar to the system in Figure 5, with the exception that the relationship is:

$$\frac{Fc}{c-f}$$

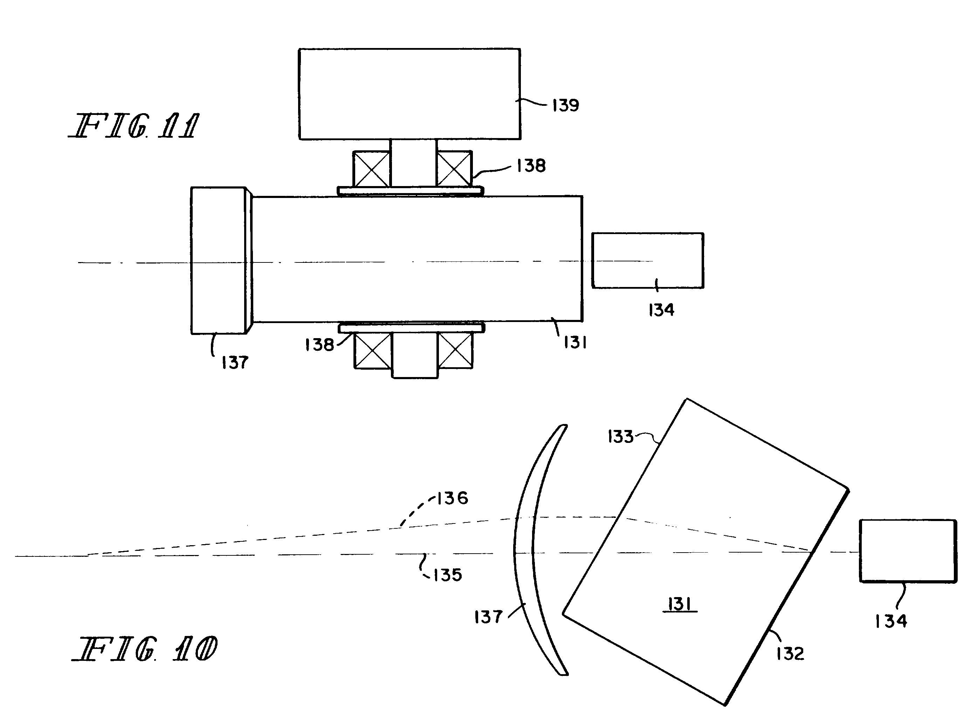

The above discussions for disparity control apply to this system as well. The use of linear camera motions can also be avoided by another system which rotates a glass optical path shifter back and forth. As shown in Figures 10 and 11. The optical path shifter 131 has two polished surfaces 132 and 133.

When shifter 131 is not rotated the camera 134 axis is the nominal 135. However when the shifter 131 is rotated as shown, the axis 136 is offset by shifter 131 and deflected by the cylindrical lens 137. The shifter 131 can also be rotated on multiple axes to create differing directions of parallax i.e. horizontal, diagonal, vertical, circular or elliptical.

Figure 11 shows a top view for Figure 10 and includes bearings 138 for the shifter 131 to rotate in. Disparity motor 139 can readily be made non-reactive by using a type DC motor with a commutation system which accounts for both armature and stator positions.

Again, the disparity control system is as described above. The optically best camera system uses a minimum of optical components as shown in Figures 1 and 2. Less expensive and less capable systems may be created using optical components to bend the light paths. There are many possible optical solutions to the problem of manipulating the light path to provide a scan of parallax views. For example the optical shifter 131 and cylindrical lens 137 of Figures 10 and 11 may be combined into a single element by simply making the optical shifter 131 and cylindrical lens 137 of Figures 10 and 11 may be combined into a single element by simply making the parallel surfaces curved as a lens.

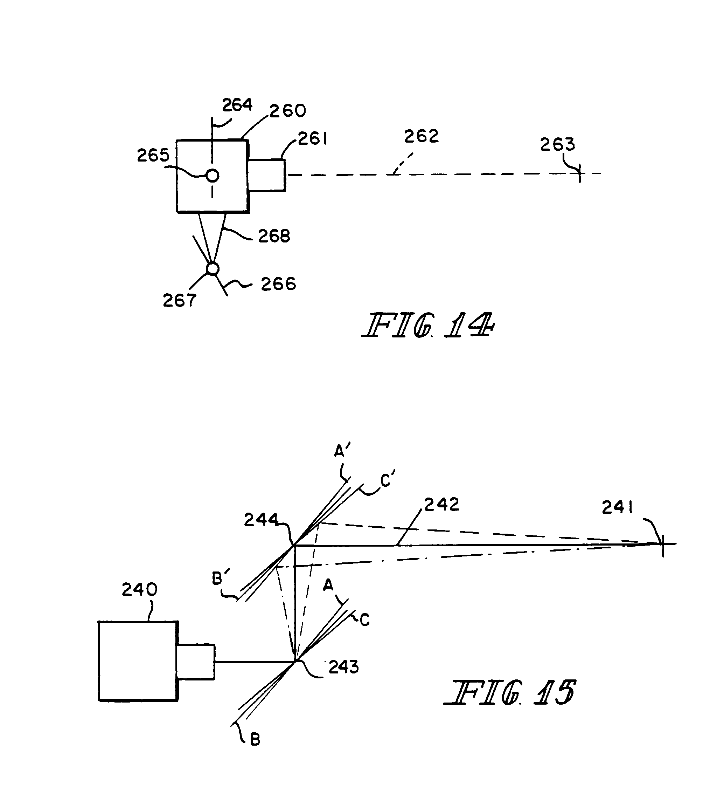

Figure 13 shows another rail system scanning apparatus for moving an image receiver 234 relative to a scene. Dashed curve 230 is the scanning arc about convergent point 231. Heavy line 232 represents a mounting plate which moves along arc 230 via bearings 233 and supports image receiver 234. This assembly is driven by a motor (not shown) to provide approximate sinusoidal motion. Travelling along a single arc reduces the usefulness to a single convergent distance. The rails 235 and 236 are designed tangent to the desired arc at bearings 233. Furthermore, these rails can be pivoted about shafts 237 and 238 by positioners, previously described for convergent rail 13, to approximate a wide range of arcs which center on convergent points at varying distances from the image receiver. Thus, as long as the motion is small, the image receiver 234 will travel in an approximate arc about convergent point 231. This approximation is quite good since the angles are small, about one milliradian.

Another rail system is illustrated in Figure 14. An image receiver or camera 260 includes a lens 261 and an optical path 262 which passes through the convergent point 263. The image receiver 260 moves on fixed rail 264 with bearing 265 and moves on the rotatable rail 266 with bearing 267 and connecting linkage 268. A pair of parallel rails 264 may be provided for stability. The image receiver 260 is moved along the rails and to producing scanning motion about the convergent point 263 as approximated by rail 264. The angle of the image receiver 260 is changed by the camera pivoting about the bearing 265 as forced by the rail 266, bearing 267, linkage 268 and the scanning motion. This is a modification of the rail system of Figure 4 in that the pair of parallel rails 64 in Figure 14 are not displaced along the optical path as parallel rails 11 and 12 in Figures 1-4.

The approximation that the different positions along the arch are equidistant from the convergent point 263 holds for small changes in the angle in the optical axis 262 which is preferable one milliradiant. At one milliradiant, the distant between the image receiver 260 and the ideal convergent point 63 changes 0.5 parts per million (ppm) and the ideal convergent point moves 0.5 ppm. These errors are much smaller than the best media resolution of 100 ppm and much smaller than the resolution of television which is approximately 5,000 ppm.

The angle of rail 266 may be adjusted to change the position of the convergent point 263 and define a new scanning path having views equally distant from the convergent point as is rail 13.

Figure 15 shows scanning apparatus which performs optical path manipulation for a fixed image receiver 240. Optical path manipulation may be accomplished by reflection or refraction. Image receiver 240 is aimed at convergent point 241 via nominal optical path 242 obtained with the mirrors 243 and 244 in positions B and B'. The scanning is accomplished by rotating the mirrors cyclically between extreme positions A, A', C and C'. The mirrors are rotated so that the resulting optical paths always go through the convergent point 241. Functionally, mirror 243 produces the required scan while mirror 244 corrects for the resulting optical path angle to maintain the length of the optical path between the image receiver 240 and the convergent point 241 substantially fix and aim the optical path at the convergent point 241.

Similarly, there are many different mechanical and electronic solutions to the autostereoscopic scanning problem. Although all the embodiments have been mechanical and optical, the same effect and results can be achieved or simulated by computer generated images simulating the recorder systems described herein. Software programs capable of such simulation which manipulate hierarchy and control camera movement include SCULPT IVD from Byte by Byte and TURBOSILVER from Impulse.

The recorder as used herein is to mean that portion of a recorder which includes its optics and the sensor at the imaging plane. In a film camera, the imaging plane is at the film. Thus the images are recorded at the imaging plane. For electronic video cameras, a sensor, for example a CCD chip or the equivalent, is at the imaging plane with the recording of the image being remote. In this application, the optics and the sensor are the portions being moved with the remote recording being stationary as is the magazine in Figures 1-3.

## Claims

1. An autostereoscopic image recorder comprising:

   a single recording means (1) for recording images and having an optical path (65) through a convergence point (66) between a scene and said recording means (1);

   a scanning mechanism for defining an arcuate scanning path transverse to said optical path; and

   driving means (40, 90) coupled for reciprocally and substantially continuously driving said recording means (1) along said scanning path, whereby said optical path remains centered at said convergence point (66);

   characterized by
   a disparity control system (91 - 104) including adjustment means (95, 103, 104) for determining the degree of motion of the scene of successive images being recorded and adjusting the travel along said scanning path as a function of the determined degree of motion so as to render rocking in the image less noticeable.

2. An autostereoscopic image recorder according to Claim 1, wherein said adjustment means (95, 103, 104) are adapted to increase said amount of travel along said scanning path for an increased degree of motion,

3. An autostereoscopic image recorder according to Claim 1 or 2, wherein said adjustment means includes correlation means (103) for correlating successive recorded images to determine the degree of motion.

4. An autostereoscopic image recorder according to Claim 1, wherein said disparity control system (91 - 104) further comprises synchronization means (92, 99, 95) for determining an image recording operation of said recording means (1) and synchronizing the driving means (40) to said image recording operation of the recording means (1).

5. An autostereoscopic image recorder according to Claim 4, wherein said synchronization means (92, 99, 95) controls said driving means (40, 90) for bidirectional operation of said recording means (1).

6. An autostereoscopic image recorder according to any one of Claims 1 to 5, wherein said disparity control system (91 - 104) further comprises a feedback sensor (19) for determining the location of said recording means (1) along said scanning path and second adjustment means (162, 163) for adjusting the position of the image recorded by the recording means (1) in accordance with said location of the recording means (1) along the scanning path.

7. An autostereoscopic image recorder according to Claim 6, further comprising a display (166) for displaying said recorded image, said second adjustment means (162, 163, 165) adapted to adjust the position of the recorded image on the display during displaying.

8. An autostereoscopic image recorder according to Claim 6, wherein said second adjustment means (162, 163, 165) is adapted to adjust the position of the image on a recording medium during recording.

9. An autostereoscopic image recorder according to any one of Claims 1 to 8, wherein said scanning means comprise first and second rails (11, 13), and said recording means (1) is mounted to slide on a support (5) along said rails (11, 13), said second rail (13) being angled with respect to said first rail (11) thereby defining an arcuate scanning path centered at said convergence point (66), said convergence point determined by the angle (β) between the first and second rails (11, 13).

10. An autostereoscopic image recorder according to Claim 9, wherein the angle (β) between the rails is variable as said support (5) is reciprocally moved by said driving means (40).

11. A method of autostereoscopic image recording comprising the steps of:

reciprocally and substantially continuously moving a recording means (1) which has a single optical path along an arcuate scanning path for a plurality of cycles while maintaining the optical path converged at a convergence point (66) between a scene and said recording means,

determining a degree of motion of the scene of successive images being recorded by said recording means (1); and

adjusting an amount of travel of said recording means (1) along said scanning path as a function of said determined degree of motion of said images so as to render rocking in the image less noticeable.

12. A method of autostereoscopic image recording of Claim 11, further including the step of increasing said amount of travel of said recording means (1) along said scanning path for an increase in said determined degree of motion of said images.

13. A method of autostereoscopic image recording of Claim 11, wherein the step of determining said degree of motion of said images includes the step of correlating successive recorded images to determine said degree of motion of said images.

14. A method of autostereoscopic image recording of Claim 11, further comprising the steps of:

determining an image recording operation of said recording means (1); and

synchronizing the movement of said recording means (1) to the image recording operation thereof.

15. A method of autostereoscopic image recording according to Claim 14, wherein said synchronizing includes bi-directional operation comprising the step of reversing the motion of said recording means (1) when an operation of said recording means is changed.

16. A method of autostereoscopic image recording according to Claim 11, further comprising the steps of:

determining the location of said recording means (1) along said scanning path; and

adjusting the position of the image recorded by the recording means (1) in accordance with said location of the recording means (1).

17. A method of autostereoscopic image recording according to Claim 11, further comprising the steps of:

reciprocally moving the recording means (1) while maintaining said optical path converged at a point (66) at a first distance (c) in front of the recording means (1);

determining a new convergence point (66) at a second distance in front of the recording means (1);

adjusting said scanning path during said moving of the recording means (1) to maintain said optical path converged at the new convergence point (66).

**Patentansprüche**

1. Autostereoskopische Bildaufzeichnungseinrichtung, die folgendes aufweist:

- eine einzige Aufzeichnungseinrichtung (1), die zum Aufzeichnen von Bildern dient und die einen optischen Weg (65) durch einen Konvergenzpunkt (66) zwischen einer Szene und der Aufzeichnungseinrichtung (1) aufweist;
- einen Abtastmechanismus, um einen bogenförmigen Abtastweg quer zu dem optischen Weg zu definieren; und
- eine Antriebseinrichtung (40, 90), die so angeschlossen ist, daß sie die Aufzeichnungseinrichtung (1) längs des Abtastweges hin- und hergehend und im wesentlichen kontinuierlich antreibt, so daß dadurch der optische Weg an dem Konvergenzpunkt (66) zentriert bleibt,

gekennzeichnet durch
ein Disparations-Steuersystem (91 bis 104), das eine Einstelleinrichtung (95, 103, 104) aufweist, um den Grad der Bewegung der Szene von aufeinanderfolgenden Bildern, die gerade aufgezeichnet werden, zu bestimmen und um die Bewegung längs des Abtastweges als Funktion des bestimmten Grades der Bewegung einzustellen, um ein Schwingen in dem Bild weniger bemerkbar zu machen.

2. Autostereoskopische Bildaufzeichnungseinrichtung nach Anspruch 1,
wobei die Einstelleinrichtung (95, 103, 104) dazu ausgelegt ist, das Ausmaß der Bewegung längs des Abtastweges für einen erhöhten Grad der Bewegung zu erhöhen.

3. Autostereoskopische Bildaufzeichnungseinrichtung nach Anspruch 1 oder 2,
wobei die Einstelleinrichtung eine Korrelationseinrichtung (103) aufweist, um aufeinanderfolgende aufgezeichnete Bilder zu korrelieren, um den Grad der Bewegung zu bestimmen.

4. Autostereoskopische Bildaufzeichnungseinrichtung nach Anspruch 1,
wobei das Disparations-Steuersystem (91 bis 104) ferner eine Synchronisationseinrichtung (92, 99, 95) aufweist, um einen Bildaufzeichnungsbetrieb der Aufzeichnungseinrichtung (1) zu bestimmen und die Antriebseinrichtung (40) auf den Bildaufzeichnungsbetrieb der Aufzeichnungseinrichtung (1) zu synchronisieren.

5. Autostereoskopische Bildaufzeichnungseinrichtung nach Anspruch 4,
wobei die Synchronisationseinrichtung (92, 99, 95) die Antriebseinrichtung (40, 90) für einen Betrieb der Aufzeichnungseinrichtung (1) in zwei Richtungen steuert.

6. Autostereoskopische Bildaufzeichnungseinrichtung nach einem der Ansprüche 1 bis 5,
wobei das Disparations-Steuersystem (91 bis 104) ferner einen Rückkopplungssensor (19), um den Ort der Aufzeichnungseinrichtung (1) längs des Abtastweges zu bestimmen, und eine zweite Einstelleinrichtung (162, 163) aufweist, um die Position des von der Aufzeichnungseinrichtung (1) aufgezeichneten Bildes in Abhängigkeit von dem Ort der Aufzeichnungseinrichtung (1) längs des Abtastweges einzustellen.

7. Autostereoskopische Bildaufzeichnungseinrichtung nach Anspruch 6,
die ferner ein Display (166) aufweist, um das aufgezeichnete Bild zur Anzeige zu bringen, wobei die zweite Einstelleinrichtung (162, 163, 165) so ausgelegt ist, daß sie die Position des aufgezeichneten Bildes auf dem Display während der Anzeige einstellt.

8. Autostereoskopische Bildaufzeichnungseinrichtung nach Anspruch 6,
wobei die zweite Einstelleinrichtung (162, 163, 165) so ausgelegt ist, daß sie die Position des Bildes auf einem Aufzeichnungsmedium während des Aufzeichnens einstellt.

9. Autostereoskopische Bildaufzeichnungseinrichtung nach einem der Ansprüche 1 bis 8,
wobei die Abtasteinrichtung erste und zweite Schienen (11, 13) aufweist und die Aufzeichnungseinrichtung (1) so montiert ist, daß sie auf einem Träger (5) längs der Schienen (11, 13) gleitet, wobei die zweite Schiene (13) winklig bezüglich der ersten Schiene (11) vorgesehen ist und dadurch einen bogenförmigen Abtastweg bildet, der sein Zentrum an dem Konvergenzpunkt (66) hat, wobei der Konvergenzpunkt durch den Winkel (β) zwischen den ersten und zweiten Schienen (11, 13) bestimmt ist.

10. Autostereoskopische Bildaufzeichnungseinrichtung nach Anspruch 9,
wobei der Winkel (β) zwischen den Schienen variabel ist, wenn der Träger (5) von der Antriebseinrichtung (40) hin-und herbewegt wird.

11. Verfahren zur autostereoskopischen Bildaufzeichnung, das folgende Schritte aufweist:

- eine Aufzeichnungseinrichtung (1), die einen einzigen optischen Weg hat, wird im wesentlichen kontinuierlich hin- und herbewegt längs eines bogenförmigen Abtastweges über eine Vielzahl von Zyklen, wobei der optische Weg, der an einem Konvergenzpunkt (66) zwischen einer Szene und der Aufzeichnungseinrichtung konvergiert, aufrecht erhalten wird,
- es wird ein Grad der Bewegung der Szene von aufeinanderfolgenden Bildern, die von der Aufzeichnungseinrichtung (1) gerade aufgezeichnet werden, bestimmt; und
- es wird ein Ausmaß der Bewegung der Aufzeichnungseinrichtung (1) längs des Abtastweges als Funktion des bestimmten Grades der Bewegung der Bilder eingestellt, um ein Schwingen in dem Bild weniger bemerkbar zu machen.

12. Verfahren zur autostereoskopischen Bildaufzeichnung nach Anspruch 1,
das ferner den Schritt aufweist, daß das Ausmaß der Bewegung der Aufzeichnungseinrichtung (1) längs des Abtastweges bei einer Zunahme des bestimmten Grades der Bewegung der Bilder vergrößert wird.

13. Verfahren zur autostereoskopischen Bildaufzeichnung nach Anspruch 11,
wobei der Schritt der Bestimmung des Grades der Bewegung der Bilder den Schritt aufweist, daß aufeinanderfolgende aufgezeichnete Bilder korreliert werden, um den Grad der Bewegung der Bilder zu bestimmen.

14. Verfahren zur autostereoskopischen Bildaufzeichnung nach Anspruch 11,

das ferner folgende Schritte aufweist:
Bestimmen eines Bildaufzeichnungsbetriebes der Aufzeichnungseinrichtung (1); und Synchronisieren der Bewegung der Aufzeichnungseinrichtung (1) auf ihren Bildaufzeichnungsbetrieb.

15. Verfahren zur autostereoskopischen Bildaufzeichnung nach Anspruch 14,
wobei das Synchronisieren einen Betrieb in zwei Richtungen umfaßt und den Schritt der Umkehrung der Bewegung der Aufzeichnungseinrichtung (1) aufweist, wenn ein Betrieb der Aufzeichnungseinrichtung geändert wird.

16. Verfahren zur autostereoskopischen Bildaufzeichnung nach Anspruch 11,

das ferner folgende Schritte aufweist:
Bestimmen des Ortes der Aufzeichnungseinrichtung (1) längs des Abtastweges; und Einstellen der Position des Bildes, das von der Aufzeichnungseinrichtung (1) aufgezeichnet wird, in Abhängigkeit von dem Ort der Aufzeichnungseinrichtung (1).

17. Verfahren zur autostereoskopischen Bildaufzeichnung nach Anspruch 11,

das ferner folgende Schritte aufweist:
Hin- und Herbewegen der Aufzeichnungseinrichtung (1), während der optische Weg aufrechterhalten wird, der an einer Stelle (66) in einem ersten Abstand (c) vor der Aufzeichnungseinrichtung (1) konvergiert;
Bestimmen eines neuen Konvergenzpunktes (66) in einem zweiten Abstand vor der Aufzeichnungseinrichtung (1); Einstellen des Abtastweges während der Bewegung der Aufzeichnungseinrichtung (1), um den optischen Weg aufrechtzuerhalten, der an dem neuen Konvergenzpunkt (66) konvergiert.

**Revendications**

1. Appareil destiné à l'enregistrement d'images autostéréoscopiques, comprenant :

- un dispositif d'enregistrement unique (1) pour enregistrer des images et ayant un trajet optique (65) traversant un point de convergence (66) entre une scène et ledit dispositif d'enregistrement (1) ;
- un mécanisme de balayage pour définir un trajet de balayage arqué transversal audit trajet optique ; et

- des moyens d'entraînement (40, 90) accouplés pour entraîner en va-et-vient et sensiblement en continu ledit dispositif d'enregistrement (1) le long dudit trajet de balayage, grâce à quoi ledit trajet optique reste centré au niveau dudit point de convergence (66) ;

caractérisé par :

- un système de commande de disparité (91-104) qui inclut des moyens d'ajustement (95, 103, 104) pour déterminer le degré de mouvement de la scène d'images successives qui sont enregistrées et pour ajuster le déplacement le long dudit trajet de balayage en fonction du degré de mouvement déterminé, de façon à rendre les basculements de l'image moins perceptibles.

2. Appareil destiné à l'enregistrement d'images autostéréoscopiques selon la revendication 1, dans lequel lesdits moyens d'ajustement (95, 103, 104) sont adaptés à augmenter ladite amplitude de déplacement le long dudit trajet de balayage pour un degré de mouvement augmenté.

3. Appareil destiné à l'enregistrement d'images autostéréoscopiques selon l'une ou l'autre des revendications 1 et 2, dans lequel lesdits moyens d'ajustement incluent des moyens de corrélation (103) pour effectuer une corrélation d'images enregistrées successives afin de déterminer le degré de mouvement.

4. Appareil destiné à l'enregistrement d'images autostéréoscopiques selon la revendication 1, dans lequel ledit système de commande de disparité (91-104) comprend en outre des moyens de synchronisation (92, 99, 95) pour déterminer un fonctionnement en enregistrement d'images dudit dispositif d'enregistrement (1) et pour synchroniser les moyens d'entraînement (40) avec le fonctionnement en enregistrement d'images du dispositif d'enregistrement (1).

5. Appareil destiné à l'enregistrement d'images autostéréoscopiques selon la revendication 4, dans lequel lesdits moyens de synchronisation (92, 99, 95) commandent lesdits moyens d'entraînement (40, 90) pour un fonctionnement bidirectionnel dudit dispositif d'enregistrement (1).

6. Appareil destiné à l'enregistrement d'images autostéréoscopiques selon l'une quelconque des revendications 1 à 5, dans lequel ledit système de commande de disparité (91-104) comprend en outre un capteur de rétroaction (19) pour déterminer l'emplacement dudit dispositif d'enregistrement (1) le long dudit trajet de balayage, et des seconds moyens d'ajustement (162, 163) pour ajuster la position de l'image enregistrée par le dispositif d'enregistrement (1) en accord avec ledit emplacement du dispositif d'enregistrement (1) le long du trajet de balayage.

7.  Appareil destiné à l'enregistrement d'images auto-stéréoscopiques selon la revendication 6, comprenant en outre un affichage (166) pour afficher lesdites images enregistrées, lesdits seconds moyens d'ajustement (162, 163, 165) étant adaptés à ajuster la position de l'image enregistrée sur l'affichage pendant l'affichage.

8.  Appareil destiné à l'enregistrement d'images auto-stéréoscopiques selon la revendication 6, dans lequel lesdits seconds moyens d'ajustement (162, 163, 165) sont adaptés à ajuster la position de l'image sur un support d'enregistrement pendant l'enregistrement.

9.  Appareil destiné à l'enregistrement d'images auto-stéréoscopiques selon l'une quelconque des revendications 1 à 8, dans lequel lesdits moyens de balayage comprennent premier et un second rail (11, 13), et ledit dispositif d'enregistrement (1) est monté en coulissement sur un support (5) le long desdits rails (11, 13), ledit second rail (13) formant un angle par rapport audit premier rail (11) en définissant ainsi un trajet de balayage arqué centré au niveau dudit point de convergence (66), ledit point de convergence étant déterminé par l'angle (β) entre le premier et le second rail (11, 13).

10. Appareil destiné à l'enregistrement d'images auto-stéréoscopiques selon la revendication 9, dans lequel l'angle (β) entre les rails est variable tandis que ledit support (5) est déplacé en va-et-vient par lesdits moyens d'entraînement (40).

11. Procédé pour enregistrer des images auto-stéréoscopiques, comprenant les étapes consistant à :

    -   déplacer en va-et-vient et sensiblement en continu un dispositif d'enregistrement (1) qui possède un trajet optique unique le long d'un trajet de balayage arqué pendant une pluralité de cycles tout en maintenant le trajet optique convergeant au niveau d'un point de convergence (66) entre une scène et ledit dispositif d'enregistrement,
    -   déterminer un degré de mouvement de la scène d'images successives qui sont enregistrées par ledit dispositif d'enregistrement (1) ; et
    -   ajuster une amplitude de déplacement dudit dispositif d'enregistrement (1) le long dudit trajet de balayage en fonction du degré de mouvement déterminé desdites images, de façon à rendre les basculements de l'image moins perceptibles.

12. Procédé pour enregistrer des images auto-stéréoscopiques selon la revendication 11, comprenant en outre l'étape consistant à augmenter ladite amplitude de déplacement dudit dispositif d'enregistrement (1) le long dudit trajet de balayage pour une augmentation dudit degré de mouvement déterminé desdites images.

13. Procédé pour enregistrer des images auto-stéréoscopiques selon la revendication 11, dans lequel l'étape consistant à déterminer ledit degré de mouvement desdites images inclut l'opération consistant à effectuer une corrélation d'images enregistrées successives pour déterminer ledit degré de mouvement desdites images.

14. Procédé pour enregistrer des images auto-stéréoscopiques selon la revendication 11, comprenant en outre les étapes consistant à :

    -   déterminer un fonctionnement en enregistrement d'images dudit dispositif d'enregistrement (1) ; et
    -   synchroniser le déplacement dudit dispositif d'enregistrement (1) au fonctionnement en enregistrement d'images de celui-ci.

15. Procédé pour enregistrer des images auto-stéréoscopiques selon la revendication 14, dans lequel ladite synchronisation inclut un fonctionnement bidirectionnel qui comprend l'étape consistant à inverser le déplacement dudit dispositif d'enregistrement (1) lorsqu'on change un fonctionnement dudit dispositif d'enregistrement.

16. Procédé pour enregistrer des d'images auto-stéréoscopiques selon la revendication 11, comprenant en outre les étapes consistant à :

    -   déterminer l'emplacement dudit dispositif d'enregistrement (1) le long dudit trajet de balayage ; et
    -   ajuster la position de l'image enregistrée par le dispositif d'enregistrement (1) en accord avec ledit emplacement du dispositif d'enregistrement (1).

17. Procédé pour enregistrer des d'images auto-stéréoscopiques selon la revendication 11, comprenant en outre les étapes consistant à :

    -   déplacer en va-et-vient le dispositif d'enregistrement (1) tout en maintenant ledit trajet optique convergeant au niveau d'un point (66) à une première distance (c) en face du dispositif d'enregistrement (1);

- déterminer un nouveau point de convergence (66) à une seconde distance en face du dispositif d'enregistrement (1) ; et

- ajuster ledit trajet de balayage pendant ledit déplacement du dispositif d'enregistrement (1) pour maintenir ledit trajet optique convergeant au niveau du nouveau point de convergence (66).

*FIG. 1*

FIG. 2

FIG. 3

FIG. 4

FIG. 5

TO CAMERA

FIG. 6

TO FRAME

FIG. 7

FIG. 8

*FIG. 9*

*FIG. 9A*

FIG. 11

139

138

134

137

138

131

133

136

135

137

131

132

134

FIG. 10

EP 0 559 801 B1

*FIG. 12*

*FIG. 13*

FIG. 14

FIG. 15